# EUROPEAN PATENT SPECIFICATION

(11) **EP 3 823 456 B1**
(45) Date of publication and mention of the grant of the patent: **29.06.2022**
(21) Application number: 19749453.7
(22) Date of filing: 15.07.2019
(51) Int. Cl.: A22B 3/00, A22B 3/08, A61D 7/04

(54) **DEVICE AND METHOD FOR EUTHANIZING AN ANIMAL**
VORRICHTUNG UND VERFAHREN ZUR EUTHANISIERUNG EINES TIERES
DISPOSITIF ET MÉTHODE PERMETTANT D'EUTHANASIER UN ANIMAL

(30) Priority: 16.07.2018 NL 2021311
(43) Date of publication of application: 26.05.2021
(73) Proprietor: Schippers Europe B.V., 5531 AH Bladel (NL)
(72) Inventor: VERSTIJNEN, Cornelis Wilhelmus, 5531 AH BLADEL (NL)
(74) Representative: Geurts, Franciscus Antonius
(86) International application number: PCT/NL2019/050445
(87) International publication number: WO 2020/017957

(56) References cited:
- WO-A1-2018/106115
- DE-A1- 3 039 969
- KR-B1- 101 833 224
- US-B1- 9 126 850
- D. E. F. MCKEEGAN ET AL: "Physiological and behavioral responses of poultry exposed to gas-filled high expansion foam", POULTRY SCIENCE, vol. 92, no. 5, 1 May 2013 (2013-05-01), pages 1145-1154, XP055442006, Oxford ISSN: 0032-5791, DOI: 10.3382/ps.2012-02587

## Description

### BACKGROUND

The invention relates to a device for euthanizing an animal.

WO 2007/021178 discloses a device wherein an animal to be euthanized is fully submerged in a foam that contains a lethal gas.

KR 101 833 224 B1 discloses a device for euthanizing an animal according to the preambles of claims 1 and 14.

DE 3039969 A1 discloses a foam generator that generates foam by means of an oscillating membrane.

### SUMMARY OF THE INVENTION

A disadvantage of the device as known from WO 2007/021178 is that the foam lacks homogeneity in its bubble size. Foam areas having small bubbles may be directly inhaled by the animal, whereby it dies due to drowning, which may cause panic and is considered inhumane. Large bubbles may burst prematurely, whereby the gas is released before the animal is submerged therein.

It is an object of the present invention to provide a device for euthanizing an animal based on submerging the animal in a foam that is filled with a gas, wherein the gas is properly released to the animal.

According to a first aspect, the invention provides a device for euthanizing an animal, comprising a first container having an euthanasia chamber for receiving the animal, a foam generator for filling the euthanasia chamber with a gas filled foam, and a gas source for providing a gas to the foam generator, wherein the foam generator comprises a second container having a liquid chamber that is at least partly filled with a mixture containing liquid water and a foaming agent, and at least one bubble blower that is vertically guided inside the liquid chamber, wherein the bubble blower comprises a bottom end, a hollow buoyancy body having an internal gas chamber that is fluently connected with the gas source, and at least one gas nozzle above the bottom end that is fluently connected with the gas chamber, wherein the bubble blower has buoyancy when the internal gas chamber is filled with the gas to float in the mixture, wherein afloat the gas nozzle extends at least partly below the surface of the mixture.

The device according to the invention comprises a foam generator having a floating bubble blower, wherein the height of the gas nozzle with respect to the surface of the mixture containing liquid water and foaming agent in which it floats is practically constant. Once this height is properly set in relation to other process parameters to obtain the desired average bubble size, this average bubble size in the formed foam body is ensured independent of the level of the mixture. The other process parameters are for example the gas flow, the type of gas and the concentration of the foaming agent.

In an embodiment thereof, when the bubble blower is afloat, the gas nozzle extends fully below the surface of the mixture.

In an embodiment the bubble blower comprises a side tube that projects from the hollow buoyancy body, wherein the gas nozzle is located at the distal end of the side tube. The side tube provides some distance with respect to the hollow buoyancy body, wherein the formed bubbles can be released in any direction.

In an embodiment the side tube has a top side, wherein, when the bubble blower is afloat, the top side extends above the surface of the mixture, or at a depth with respect to the surface of less than half the diameter of the side tube. It has been found that at these specific depths of the side tube the bubbles of the foam can be efficiently formed.

In an embodiment the bubble blower comprises multiple gas nozzles that are distributed around the hollow buoyancy body, wherein the gas nozzles extend at the same height with respect to the bottom end. The multiple gas nozzles are spaced apart from each other to form multiple bubble sources that work independently from each other in forming the foam body.

In an embodiment the bubble blower comprises a drain opening for the internal gas chamber in the bottom end, whereby any water in the internal gas chamber can be drained from the internal gas chamber by the inserted gas to ensure the required floating height.

In an embodiment the hollow buoyancy body comprises an elongate, hollow tube that is vertically guided inside the liquid chamber.

In an embodiment the bubble generator comprises a support inside the second container that bounds a guide channel through which the bubble blower slidably extends.

In an embodiment the foam generator comprises multiple vertically guided bubble blowers to form multiple bubble sources that work independently from each other in forming the foam body.

In an embodiment the second container comprises at least one foam release opening that is located higher than the gas nozzle of the bubble blower, whereby the foam body is primarily formed inside the second container before it is transferred to the euthanasia chamber. Instable bubbles can burst in this upward trajectory whereby it is prevented that the instable bubbles burst prematurely in the euthanasia chamber.

In an embodiment thereof the second container comprises multiple, elongate foam release openings that extend parallel to each other.

In an embodiment the second container is located inside the first container, whereby the first container receives all moist that may be released from the foam.

In an embodiment the gas source provides an oxygen expelling gas, a narcotizing gas or a lethal gas to the foam generator.

In an embodiment thereof the gas is selected from or is a mixture with nitrogen, carbon dioxide or carbon monoxide.

In an embodiment the foaming agent is a surfactant.

According to a second aspect, the invention provides a method for euthanizing an animal by means of a device for euthanizing an animal, wherein the device comprises a first container having an euthanasia chamber for receiving the animal, a foam generator for filling the euthanasia chamber with a gas filled foam, and a gas source for providing a gas to the foam generator, wherein the foam generator comprises a second container having a liquid chamber that is at least partly filled with a mixture containing liquid water and a foaming agent, and at least one bubble blower that is vertically guided inside the liquid chamber, wherein the bubble blower comprises a bottom end, a hollow buoyancy body having an internal gas chamber that is fluently connected with the gas source, and at least one gas nozzle above the bottom end that is fluently connected with the gas chamber, wherein the bubble blower has buoyancy when the internal gas chamber is filled with the gas to float in the mixture, wherein afloat the gas nozzle extends at least partly below the surface of the mixture, wherein the method comprises providing the gas to the foam generator whereby the bubble blower floats and the gas nozzle blows bubbles to form a gas filled foam body in the euthanasia chamber, and submerging at least the nose and mouth area of the animal in the foam body in the euthanasia chamber.

In an embodiment thereof the gas is an oxygen expelling gas, a narcotizing gas or a lethal gas.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1A is an isometric view of a device, according to an embodiment of the invention;
Figure 1B is the device according to figure 1A, with a partial cut out to show an internal foam generator thereof;
Figure 2A is an isometric view of the foam generator of figure 1B;
Figure 2B, is an isometric view of the foam generator of figure 2A, wherein the outer parts have been shown transparent to show the internal bubble blowers thereof; and
Figures 3A and 3B are an isometric view of one of the bubble blowers and a side view thereof when blowing bubbles.

### DETAILED DESCRIPTION OF THE INVENTION

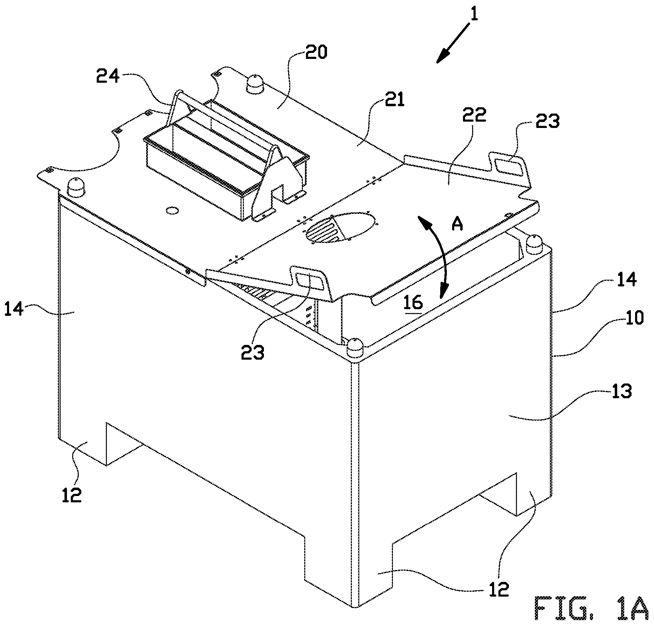

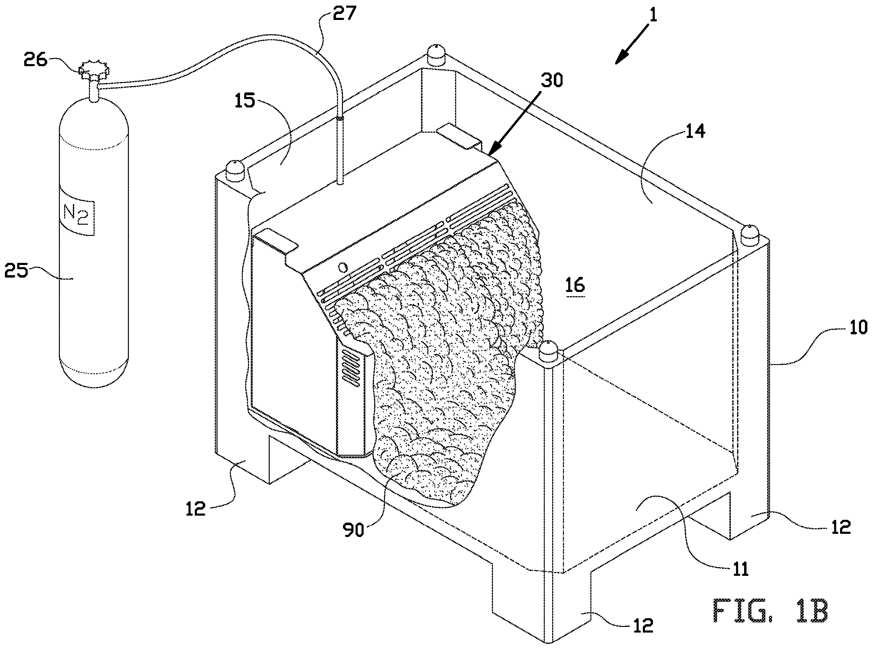

Figures 1A and 1B show a device 1 for use in livestock and poultry farming. The device 1 is destined for euthanizing small animals, such as chickens, piglets and calves in a fast and painless way on a farming site. The device 1 is not intended for euthanizing human. Sometimes such small animals have to be euthanized because of illness or because they are diagnosed not viable after birth. Usually a veterinarian performs the euthanasia, but for larger farms the local caregivers can also diagnose the small animals and perform euthanasia.

The device 1 comprises a plastic container 10 having a flat bottom wall 11 that is horizontally supported by four legs 12, and a vertical front wall 13, two vertical sidewalls 4 and a vertical back wall 15 that merge into each other to bound a gastight and watertight euthanasia chamber 16. The device 1 has a steel cover 20 on the container 10 that closes off the euthanasia chamber 16. In this embodiment, the cover comprises a fixed lid 21 that is mounted to the container 10, and a hinged lid 22 having hand grips 23 to be lifted and closed in direction A. In this embodiment the device 1 comprises a toolbox 24 on top of the fixed lid 21 to store tools that might be needed to operate the device 1. The device 1 comprises a foam generator 30 below the fixed lid 21. The foam generator 30 is a separate unit that stands on the bottom wall 11 and against the back wall 15. The device 1 comprises a gas cylinder 25 that is filled with pressurized gas. The gas can be an oxygen expelling gas, a narcotizing gas or a lethal gas, such as nitrogen, carbon dioxide or carbon monoxide. In this example the gas cylinder 25 is filled with nitrogen to form a nitrogen gas source for the foam generator 30 that is connected therewith via a valve 26 and a hose 27.

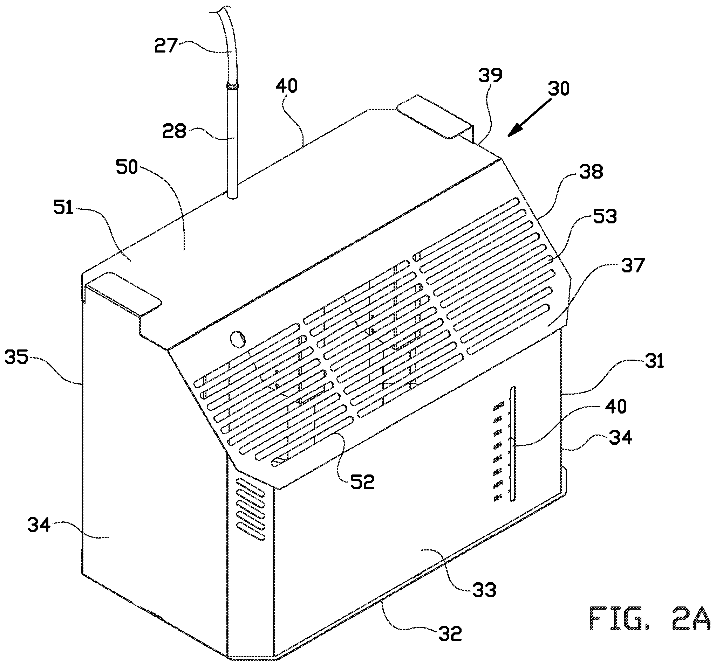

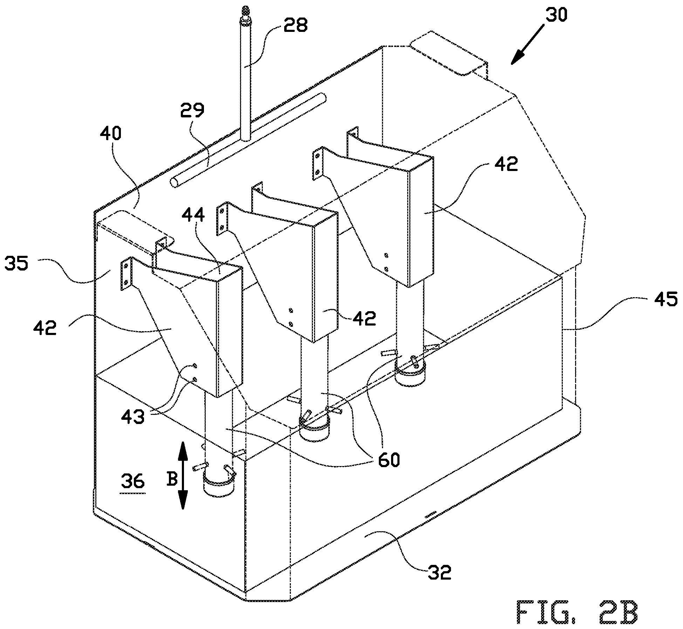

Figures 2A and 2B shows the foam generator 30 in more detail. The foam generator 30 comprises a steel container 31 having a horizontal flat bottom wall 32, and a vertical front wall 33, two vertical sidewalls 34 and a vertical back wall 35 that merge into each other. The steel container 31 encloses a rectangular, transparent plastic bin 45 that bounds a gastight and watertight liquid chamber 36 inside the steel container 31 that is open at its top side. In the front wall 33 a vertical extending liquid level indicator 40 is provided. The front wall 33 comprises a straight upper edge 37, the sidewalls 34 comprise oblique upper edges 38 that merge into horizontal upper edges 39, and the back wall 35 comprises an upper edge 40. These upper edges 37, 38, 39, 40 together bound an opening that is covered with a steel cover 50. The cover 50 comprises a horizontal lid 51 that rests on the horizontal upper edges 39, 40 of the side walls 34 and the back wall 35, and an oblique lid 52 that rests on the oblique upper edges 38 of the side walls 34 and the horizontal upper edge 37 of the front wall 33. The oblique lid 52 comprises multiple groups of foam release slits 53 that extend horizontal and parallel to each other.

As shown in figure 2B, the foam generator 30 comprises in this example three internal bubble blowers 60 inside the liquid chamber 36. The bubble blowers 60 extend through three U-formed steel supports 42 that are at their legs attached to the back wall 35. A series of guide pins 43 extend in the supports 42 to form a vertical extending guide channel 44 for guiding the bubble blowers 60 in vertical direction B. The foam generator 30 comprises a vertical extending tube 28 that extends through the steel cover 30. The hose 27 from the gas cylinder 25 is connected to the vertical extending tube 28. The vertical extending tube 28 is connected to a horizontally extending distribution tube 29.

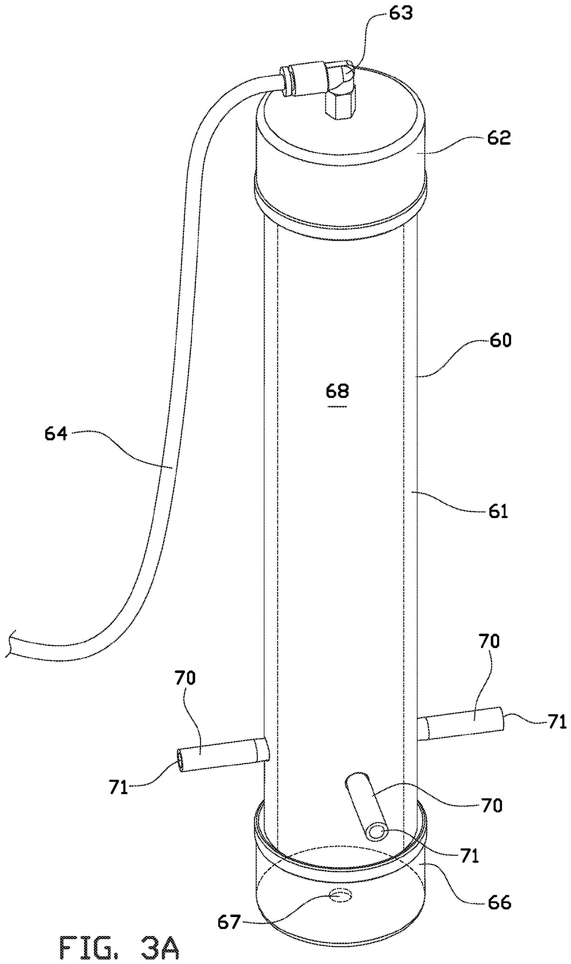

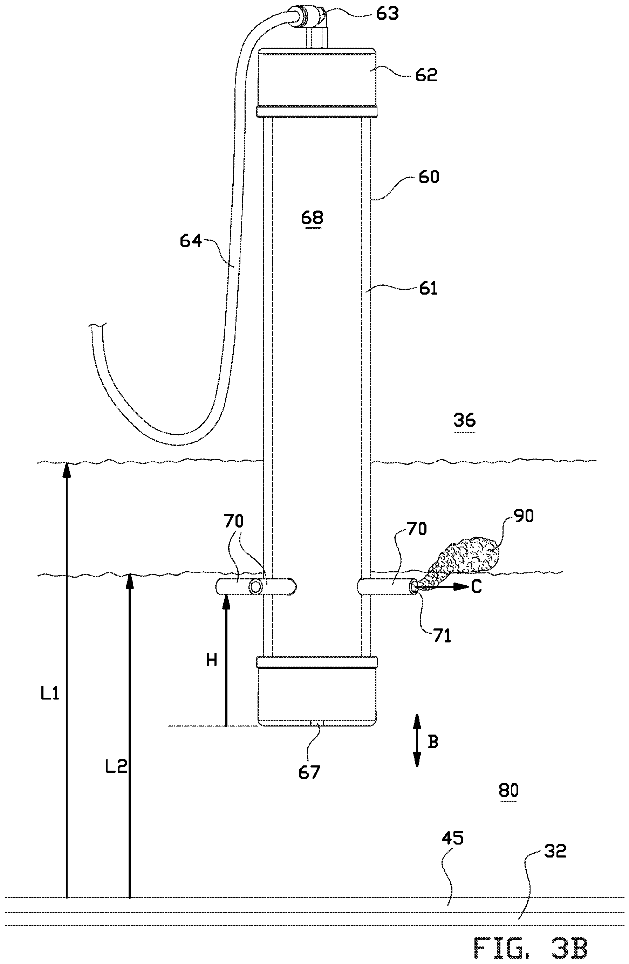

One of the bubble blowers 60 is shown in detail in figures 3A and 3B. The bubble blower 60 comprises a straight, hollow main tube 61 that is closed with a top cap 62 and a bottom cap 66 to bound an internal gas chamber 68. The bubble blower comprises on the top cap 62 a hose connector 63 for a hose 64 that is connected with the distribution tube 29. The bottom cap 66 is provided with a small drain opening 67. The bubble blower 60 comprises in this example four hollow side tubes 70 that radially extend from the lower half of the main tube 61 at a height H with respect to the bottom of the bubble blower 60. The side tubes 70 have an open distal end to form a gas nozzle 71. The drain opening 67 has about the same size as one of the gas nozzles 71. When the bubble blower 60 is at least partially submerged in water and the gas chamber 68 is filled with nitrogen gas, the bubble blower 60 forms a float that starts floating. The height H of the side tubes 70 is hereby chosen such, that the gas nozzles 71 of the side tubes 70 remain fully submerged while the top sides of the side tubes 70 are at or above the water surface, or at a depth of less than half the diameter of the side tubes 70. In practice this depth is less than 1-2 millimeter.

The euthanasia chamber 16 is large enough to receive and submerge a small animal to be euthanized. When the device 1 is operated to euthanize, the liquid chamber 36 of the foam generator 30 is filled with liquid water 80 to which a foaming agent has been added, such as a surfactant like a soap. The liquid chamber 36 is filled up to a maximum level L1 as shown in figure 3B, which can be checked by means of the liquid level indicator 40. At this stage the bubble blowers 60 stand on the bottom wall 32 and some water may enter them via the gas nozzles 71. Subsequently the hinged lid 22 is closed and the valve 26 is opened, whereby nitrogen gas enters the gas chamber 68 of the bubble blowers 60 via the distribution tube 29 and the hoses 27. The water evacuates from the hollow bubble blowers 60 via the gas nozzles 71 and finally via the small drain opening 67, whereby the bubble blowers 60 start floating and raise in the guided vertical direction B. The bubble blowers 60 raise up to a stable floating level at which the gas nozzles 71 extend just below the water surface, and generate a growing nitrogen gas filled foam body 90 on the water 80. Due to the stable floating level of the gas nozzles 71 with respect to the surface of the water 80, the foam body 90 is homogenous in the average bubble size and thereby in the stability of the bubbles. During the foam generation the level in the liquid chamber 36 gradually lowers to a lower level L2 while the above described stable floating level with respect to the surface of the water 80 as shown for this actual lower level L2 is continued.

The homogenous foam body 90 leaves the foam generator 30 via the horizontal slits 53 and fills the euthanasia chamber 16. When the homogenous foam body 90 has enough height to fully submerge a small animal to be euthanized, the hinged lid 22 is opened and the small animal is laid down on the bottom wall 11, wherein at least its nose and mouth area is fully submerged in the homogenous foam body 90. In practice the small animal is fully submerged in the homogenous foam body 90. The nose and mouth area is then fully surrounded by the nitrogen filled foam body 90 having hardly any oxygen. The bubbles locally burst whereby the small animal inhales some of the gas without inhaling the bubbles, whereby it narcotizes and dies quickly.

It is to be understood that the above description is included to illustrate the operation of the preferred embodiments and is not meant to limit the scope of the invention. From the above discussion, many variations will be apparent to one skilled in the art that would yet be encompassed by the scope of the present Z invention as defined in the appended claims.

## Claims

1. Device (1) for euthanizing an animal, comprising a first container (10) having an euthanasia chamber (16) for receiving the animal, a foam generator (30) for filling the euthanasia chamber with a gas filled foam (90), and a gas source (25) for providing a gas to the foam generator, wherein the foam generator comprises a second container (31) having a liquid chamber (36) that is at least partly filled with a mixture containing liquid water and a foaming agent, and at least one bubble blower (60) inside the liquid chamber, **characterized in that** the bubble blower is vertically guided inside the liquid chamber and comprises a bottom end (66), a hollow buoyancy body (61,62,66) having an internal gas chamber (68) that is fluently connected with the gas source, and at least one gas nozzle (71) above the bottom end that is fluently connected with the gas chamber, wherein the bubble blower has buoyancy when the internal gas chamber is filled with the gas to float in the mixture, wherein afloat the gas nozzle extends at least partly below the surface of the mixture.

2. Device (1) according to claim 1, wherein, the bubble blower (60) is afloat, the gas nozzle (71) extends fully below the surface of the mixture.

3. Device (1) according to any one of the preceding claims, wherein the bubble blower (60) comprises a side tube (70) that projects from the hollow buoyancy body (61,62,66), wherein the gas nozzle (71) is located at the distal end of the side tube.

4. Device (1) according to claim 3, wherein the side tube (70) has a top side, wherein, when the bubble blower (60) is afloat, the top side extends above the surface of the mixture, or at a depth with respect to the surface of less than half the diameter of the side tube.

5. Device (1) according to any one of the preceding claims, wherein the bubble blower (60) comprises multiple gas nozzles (71) that are distributed around the hollow buoyancy body (61,62,66), wherein the gas nozzles (71) extend at the same height with respect to the bottom end (66).

6. Device (1) according to any one of the proceeding claims, wherein the bubble blower (60) comprises a drain opening (67) for the internal gas chamber (68) in the bottom end (66).

7. Device (1) according to any one of the preceding claims, wherein the hollow buoyancy body (61,62,66) comprises an elongate, hollow tube (61) that is vertically guided inside the liquid chamber (36).

8. Device (1) according to any one of the preceding claims, wherein the bubble generator (60) comprises a support (42) inside the second container (31) that bounds a guide channel (44) through which the bubble blower (60) slidably extends.

9. Device (1) according to any one of the preceding claims, wherein the foam generator (30) comprises multiple vertically guided bubble blowers (60).

10. Device (1) according to any one of the preceding claims, wherein the second container (31) comprises at least one foam release opening (53) that is located higher than the gas nozzle (71) of the bubble blower (60),
wherein the second container preferably comprises multiple, elongate foam release openings (53) that extend parallel to each other.

11. Device (1) according to any one of the preceding claims, wherein the second container (31) is located inside the first container (10).

12. Device (1) according to any one of the preceding claims, wherein the gas source (25) provides an oxygen expelling gas, a narcotizing gas or a lethal gas to the foam generator,
wherein the gas is preferably selected from or is a mixture with nitrogen, carbon dioxide or carbon monoxide.

13. Device (1) according to any one of the preceding claims, wherein the foaming agent is a soap.

14. Method for euthanizing an animal by means of a device (1) for euthanizing an animal, wherein the device comprises a first container (10) having an euthanasia chamber (16) for receiving the animal, a foam generator (30) for filling the euthanasia chamber with a gas filled foam (90), and a gas source (25) for providing a gas to the foam generator, wherein the foam generator comprises a second container (31) having a liquid chamber (36) that is at least partly filled with a mixture containing liquid water and a foaming agent, and at least one bubble blower (60) inside the liquid chamber, **characterized in that** the bubble blower is vertically guided inside the liquid chamber and comprises a bottom end (66), a hollow buoyancy body (61,62,66) having an internal gas chamber (68) that is fluently connected with the gas source, and at least one gas nozzle (71) above the bottom end that is fluently connected with the gas chamber, wherein the bubble blower has buoyancy when the internal gas chamber is filled with the gas to float in the mixture, wherein afloat the gas nozzle extends at least partly below the surface of the mixture, wherein the method comprises providing the gas to the foam generator (30) whereby the bubble blower (60) floats and the gas nozzle (71) blows bubbles to form a gas filled foam body (90) in the euthanasia chamber, and submerging at least the nose and mouth area of the animal in the foam body in the euthanasia chamber (16).

15. Method according to claim 14, wherein the gas is an oxygen expelling gas, a narcotizing gas or a lethal gas.

## Patentansprüche

1. Vorrichtung (1) zum Einschläfern eines Tieres, umfassend einen ersten Behälter (10) mit einer Einschläferkammer (16) zum Aufnehmen des Tieres, einen Schaumgenerator (30) zum Füllen der Einschläferkammer mit einem gasgefüllten Schaum (90) und eine Gasquelle (25) zum Bereitstellen eines Gases an den Schaumgenerator, wobei der Schaumgenerator einen zweiten Behälter (31) mit einer Flüssigkeitskammer (36) umfasst, die zumindest teilweise mit einer Mischung gefüllt ist, die flüssiges Wasser und ein Schaummittel enthält, und mindestens ein Blasengebläse (60) in der Flüssigkeitskammer, **dadurch gekennzeichnet, dass** das Blasengebläse vertikal in der Flüssigkeitskammer geführt ist und ein unteres Ende (66), einen hohlen Auftriebskörper (61, 62, 66) mit einer inneren Gaskammer (68), die mit der Gasquelle strömungsverbunden ist, und mindestens eine Gasdüse (71) über dem unteren Ende, die mit der Gaskammer strömungsverbunden ist, umfasst, wobei das Blasengebläse Auftrieb hat, wenn die innere Gaskammer mit dem Gas gefüllt ist, um in der Mischung zu schwimmen, wobei sich schwimmend die Gasdüse zumindest teilweise unter der Oberfläche der Mischung erstreckt.

2. Vorrichtung (1) nach Anspruch 1, wobei das Blasengebläse (60) schwimmend ist, sich die Gasdüse (71) vollständig unter der Oberfläche der Mischung erstreckt.

3. Vorrichtung (1) nach einem der vorhergehenden Ansprüche, wobei das Blasengebläse (60) ein Seitenrohr (70) umfasst, das aus dem hohlen Auftriebskörper (61, 62, 66) herausragt, wobei sich die Gasdüse (71) am distalen Ende des Seitenrohrs befindet.

4. Vorrichtung (1) nach Anspruch 3, wobei das Seitenrohr (70) eine Oberseite aufweist, wobei, wenn das Blasengebläse (60) schwimmend ist, sich die Oberseite über der Oberfläche der Mischung oder in einer Tiefe in Bezug auf die Oberfläche von weniger als der Hälfte des Durchmessers des Seitenrohrs erstreckt.

5. Vorrichtung (1) nach einem der vorhergehenden Ansprüche, wobei das Blasengebläse (60) mehrere Gasdüsen (71) umfasst, die um den hohlen Auftriebskörper (61, 62, 66) verteilt sind, wobei sich die Gasdüsen (71) in der gleichen Höhe in Bezug auf das untere Ende (66) erstrecken.

6. Vorrichtung (1) nach einem der vorhergehenden Ansprüche, wobei das Blasengebläse (60) eine Ablassöffnung (67) für die innere Gaskammer (68) am unteren Ende (66) umfasst.

7. Vorrichtung (1) nach einem der vorhergehenden Ansprüche, wobei der hohle Auftriebskörper (61, 62, 66) ein längliches, hohles Rohr (61) umfasst, das vertikal in der Flüssigkeitskammer (36) geführt ist.

8. Vorrichtung (1) nach einem der vorhergehenden Ansprüche, wobei der Blasengenerator (60) einen Träger (42) im zweiten Behälter (31) umfasst, der einen Führungskanal (44) begrenzt, durch den sich das Blasengebläse (60) gleitend erstreckt.

9. Vorrichtung (1) nach einem der vorhergehenden Ansprüche, wobei der Schaumgenerator (30) mehrere vertikal geführte Blasengebläse (60) umfasst.

10. Vorrichtung (1) nach einem der vorhergehenden Ansprüche, wobei der zweite Behälter (31) mindestens eine Schaumfreigabeöffnung (53) umfasst, die höher als die Gasdüse (71) des Blasengebläses (60) angeordnet ist, wobei der zweite Behälter bevorzugt mehrere längliche Schaumfreigabeöffnungen (53) umfasst, die sich parallel zueinander erstrecken.

11. Vorrichtung (1) nach einem der vorhergehenden Ansprüche, wobei sich der zweite Behälter (31) im ersten Behälter (10) befindet.

12. Vorrichtung (1) nach einem der vorhergehenden Ansprüche, wobei die Gasquelle (25) ein sauerstoffvertreibendes Gas, ein Narkotisierungsgas oder ein letales Gas an den Schaumgenerator bereitstellt, wobei das Gas bevorzugt ausgewählt aus oder eine Mischung mit Stickstoff, Kohlenstoffdioxid oder Kohlenstoffmonoxid ist.

13. Vorrichtung (1) nach einem der vorhergehenden Ansprüche, wobei das Schaummittel eine Seife ist.

14. Verfahren zum Einschläfern eines Tieres mittels einer Vorrichtung (1) zum Einschläfern eines Tieres, wobei die Vorrichtung einen ersten Behälter (10) mit einer Einschläferkammer (16) zum Aufnehmen des Tieres, einen Schaumgenerator (30) zum Füllen der Einschläferkammer mit einem gasgefüllten Schaum (90) und eine Gasquelle (25) zum Bereitstellen eines Gases an den Schaumgenerator umfasst, wobei der Schaumgenerator einen zweiten Behälter (31) mit einer Flüssigkeitskammer (36) umfasst, die zumindest teilweise mit einer Mischung gefüllt ist, die flüssiges Wasser und ein Schaummittel enthält, und mindestens ein Blasengebläse (60) in der Flüssigkeitskammer, **dadurch gekennzeichnet, dass** das Blasengebläse vertikal in der Flüssigkeitskammer geführt ist und ein unteres Ende (66), einen hohlen Auftriebskörper (61, 62, 66) mit einer inneren Gaskammer (68), die mit der Gasquelle strömungsverbunden ist, und mindestens eine Gasdüse (71) über dem unteren Ende, die mit der Gaskammer strömungsverbunden ist, umfasst, wobei das Blasengebläse Auftrieb hat, wenn die innere Gaskammer mit dem Gas gefüllt ist, um in der Mischung zu schwimmen, wobei sich schwimmend die Gasdüse zumindest teilweise unter der Oberfläche der Mischung erstreckt, wobei das Verfahren ein Bereitstellen des Gases an den Schaumgenerator (30) umfasst, wobei das Blasengebläse (60) schwimmt und die Gasdüse (71) Blasen bläst, um einen gasgefüllten Schaumkörper (90) in der Einschläferkammer zu bilden, und Eintauchen zumindest der Nase und des Mundbereichs des Tieres in dem Schaumkörper in der Einschläferkammer (16).

15. Verfahren nach Anspruch 14, wobei das Gas ein sauerstoffvertreibendes Gas, ein Narkotisierungsgas oder ein letales Gas ist.

## Revendications

1. Dispositif (1) pour euthanasier un animal, comprenant un premier contenant (10) ayant une chambre d'euthanasie (16) pour recevoir l'animal, un générateur de mousse (30) pour remplir la chambre d'euthanasie avec une mousse remplie de gaz (90), et une source de gaz (25) pour fournir un gaz au générateur de mousse, dans lequel le générateur de mousse comprend un second contenant (31) ayant une chambre de liquide (36) qui est au moins partiellement remplie avec un mélange contenant de l'eau liquide et un agent moussant, et au moins un appareil à faire des bulles (60) à l'intérieur de la chambre de liquide, **caractérisé en ce que** l'appareil à faire des bulles est verticalement guidé à l'intérieur de la chambre de liquide et comprend une extrémité inférieure (66), un corps flottant creux (61, 62, 66) ayant une chambre de gaz interne (68) qui est fluidement raccordée avec la source de gaz, et au moins une buse de gaz (71) au-dessus de l'extrémité inférieure qui est fluidement raccordée avec la chambre de gaz, dans lequel l'appareil à faire des bulles présente une flottabilité lorsque la chambre de gaz interne est remplie avec le gaz pour flotter dans le mélange, dans lequel, à flot, la buse de gaz s'étend au moins partiellement au-dessous de la surface du mélange.

2. Dispositif (1) selon la revendication 1, dans lequel, l'appareil à faire des bulles (60) est à flot, la buse de gaz (71) s'étend complètement au-dessous de la surface du mélange.

3. Dispositif (1) selon l'une quelconque des revendications précédentes, dans lequel l'appareil à faire des bulles (60) comprend un tube latéral (70) qui fait saillie du corps flottant creux (61, 62, 66), dans lequel la buse de gaz (71) est positionnée au niveau de l'extrémité distale du tube latéral.

4. Dispositif (1) selon la revendication 3, dans lequel le tube latéral (70) a un côté supérieur, dans lequel, lorsque l'appareil à faire des bulles (60) est à flot, le côté supérieur s'étend au-dessus de la surface du mélange ou à une certaine profondeur par rapport à la surface de moins de la moitié du diamètre du tube latéral.

5. Dispositif (1) selon l'une quelconque des revendications précédentes, dans lequel l'appareil à faire des bulles (60) comprend plusieurs buses de gaz (71) qui sont réparties autour du corps flottant creux (61, 62, 66), dans lequel les buses de gaz (71) s'étendent à la même hauteur par rapport à l'extrémité inférieure (66).

6. Dispositif (1) selon l'une quelconque des revendications précédentes, dans lequel l'appareil à faire des bulles (60) comprend une ouverture de drain (67) pour la chambre de gaz interne (68) dans l'extrémité inférieure (66) .

7. Dispositif (1) selon l'une quelconque des revendications précédentes, dans lequel le corps flottant creux (61, 62, 66) comprend un tube creux allongé (61) qui est verticalement guidé à l'intérieur de la chambre de liquide (36).

8. Dispositif (1) selon l'une quelconque des revendications précédentes, dans lequel le générateur de bulles (60) comprend un support (42) à l'intérieur du second contenant (31) qui relie un canal de guidage (44) à travers lequel l'appareil à faire les bulles (60) s'étend de manière coulissante.

9. Dispositif (1) selon l'une quelconque des revendications précédentes, dans lequel le générateur de mousse (30) comprend plusieurs appareils à faire des bulles (60) guidés verticalement.

10. Dispositif (1) selon l'une quelconque des revendications précédentes, dans lequel le second contenant (31) comprend au moins une ouverture de libération de mousse (53) qui est plus haute que la buse de gaz (71) de l'appareil à faire des bulles (60),
dans lequel le second contenant comprend de préférence plusieurs ouvertures de libération de mousse allongées (53) qui s'étendent parallèlement entre elles.

11. Dispositif (1) selon l'une quelconque des revendications précédentes, dans lequel le second contenant (31) est situé à l'intérieur du premier contenant (10).

12. Dispositif (1) selon l'une quelconque des revendications précédentes, dans lequel la source de gaz (25) fournit un gaz d'expulsion d'oxygène, un gaz narcotique ou un gaz létal vers le générateur de mousse,
dans lequel le gaz est de préférence sélectionné parmi ou est en mélange avec l'azote, le dioxyde de carbone ou le monoxyde de carbone.

13. Dispositif (1) selon l'une quelconque des revendications précédentes, dans lequel l'agent moussant est un savon.

14. Procédé pour euthanasier un animal au moyen d'un dispositif (1) pour euthanasier un animal, dans lequel le dispositif comprend un premier contenant (10) ayant une chambre d'euthanasie (16) pour recevoir l'animal, un générateur de mousse (30) pour remplir la chambre d'euthanasie avec une mousse remplie de gaz (90), et une source de gaz (25) pour fournir un gaz au générateur de mousse, dans lequel le générateur de gaz comprend un second contenant (31) ayant une chambre de liquide (36) qui est au moins partiellement remplie avec un mélange contenant de l'eau liquide et un agent moussant, et au moins un appareil à faire des bulles (60) à l'intérieur de la chambre de liquide, **caractérisé en ce que** l'appareil à faire des bulles est verticalement guidé à l'intérieur de la chambre de liquide et comprend une extrémité inférieure (66), un corps flottant creux (61, 62, 66) ayant une chambre de gaz interne (68) qui est fluidement raccordée avec la source de gaz, et au moins une buse de gaz (71) au-dessus de l'extrémité inférieure qui est fluidement raccordée avec la chambre de gaz, dans lequel l'appareil à faire des bulles présente une flottabilité lorsque la chambre de gaz interne est remplie avec le gaz pour flotter dans le mélange, dans lequel, à flot, la buse de gaz s'étend au moins partiellement au-dessous de la surface du mélange, le procédé comprenant l'étape consistant à fournir le gaz au générateur de mousse (30), moyennant quoi l'appareil à faire des bulles (60) flotte et la buse de gaz (71) émet des bulles pour former un corps de mousse rempli de gaz (90) dans la chambre d'euthanasie, et submergeant au moins les régions du nez et de la bouche de l'animal dans le corps de mousse dans la chambre d'euthanasie (16).

15. Procédé selon la revendication 14, dans lequel le gaz est un gaz d'expulsion d'oxygène, un gaz narcotique ou un gaz létal.
